(19) Europäisches Patentamt
European Patent Office
Office européen des brevets

(11) **EP 1 480 855 B1**

(12) **EUROPÄISCHE PATENTSCHRIFT**

(45) Veröffentlichungstag und Bekanntmachung des Hinweises auf die Patenterteilung:
**23.01.2008  Patentblatt 2008/04**

(21) Anmeldenummer: **03706265.0**

(22) Anmeldetag: **30.01.2003**

(51) Int Cl.:
**B60R 16/02** *(2006.01)*

(86) Internationale Anmeldenummer:
**PCT/DE2003/000250**

(87) Internationale Veröffentlichungsnummer:
**WO 2003/072397 (04.09.2003 Gazette 2003/36)**

(54) **VERFAHREN UND VORRICHTUNG ZUR ERKENNUNG ABGEHOBENER FAHRZEUGRÄDER**

METHOD AND DEVICE FOR RECOGNISING RAISED WHEELS OF A VEHICLE

PROCEDE ET DISPOSITIF PERMETTANT DE DETECTER LES ROUES SOULEVEES D'UN VEHICULE

(84) Benannte Vertragsstaaten:
**AT BE BG CH CY CZ DE DK EE ES FI FR GB GR HU IE IT LI LU MC NL PT SE SI SK TR**

(30) Priorität: **27.02.2002  DE 10208619**

(43) Veröffentlichungstag der Anmeldung:
**01.12.2004  Patentblatt 2004/49**

(73) Patentinhaber: **ROBERT BOSCH GMBH**
**70442 Stuttgart (DE)**

(72) Erfinder: **HAAS, Hardy**
**71254 Dietzingen-Schoeckingen (DE)**

(56) Entgegenhaltungen:
**EP-A- 0 758 601        DE-A- 19 830 190**
**US-B1- 6 321 141**

**Beschreibung**

Stand der Technik

Die Erfindung geht aus von einem Verfahren zur Erkennung eines querdynamisch gefährlichen Betriebszustandes eines Fahrzeugs.

Aus der DE 197 51 925 A1 sind ein Verfahren und eine Vorrichtung zur Erkennung einer Kipptendenz um eine in Längsrichtung eines Fahrzeugs orientierte Fahrzeugachse bekannt.

Hierzu wird für wenigstens ein Rad eine die Raddrehzahl beschreibende Größe und wenigstens eine die Querdynamik des Fahrzeugs repräsentierende Größe ermittelt. In Abhängigkeit von einer die Querdynamik des Fahrzeugs repräsentierenden Größe werden an wenigstens einem Rad kurzzeitig Brems- und/oder Antriebsmomente erzeugt und/oder verändert. Während die Brems- und/oder die Antriebsmomente an dem wenigstens einen Rad kurzzeitig erzeugt und/oder verändert werden und/oder nachdem diese erzeugt und/oder verändert wurden, wird für wenigstens dieses eine Rad, in Abhängigkeit von der die Raddrehzahl dieses Rades beschreibenden Größe, eine das Radverhalten quantitativ beschreibende Größe ermittelt. In Abhängigkeit dieser Größe wird ermittelt, ob für das Fahrzeug eine Kipptendenz um eine in Längsrichtung des Fahrzeuges orientierte Fahrzeugachse vorliegt.

Aus der DE 198 56 303 A1 sind ein Verfahren und eine Vorrichtung zum Erfassen der Gefahr des Umkippens eines Kraftfahrzeugs bekannt. Darin wird der Wankwinkel eines mindestens einachsigen und mindestens zweirädrigen in einer Kurvenfahrt befindlichen Fahrzeugs, das mit einer im wesentlichen in der Horizontalebene des Fahrzeugs die am Schwerpunkt des Kraftfahrzeugs angreifende Querbeschleunigung sensierenden Querbeschleunigungssensorik ausgestattet ist, ermittelt. Um ein Verfahren zu schaffen, das ohne eine zusätzliche Sensorik auskommt und dabei von gegebenen Fahrzeugeigenschaften und
Fahrzeuggrößen weitestgehend unabhängig ist, wird

- während der Kurvenfahrt mittels der Querbeschleunigungssensorik die im wesentlichen in der Horizontalebene wirkende Komponente der Querbeschleunigung erfasst,
- eine mit der am Schwerpunkt angreifenden Zentrifugalbeschleunigung korrelierende Zustandsgröße ermittelt,
- und aus der mit einem Faktor gewichteten Differenz zwischen der erfassten Komponente der Querbeschleunigung und der ermittelten Zentrifugalbeschleunigung der Wankwinkel des Fahrzeugs berechnet.

Aus der Gattungsbildenden US 6,321,141 B1 sind eine Vorrichtung und ein Verfahren zur Erkennung einer Kipptendenz eines Fahrzeuges um eine in Längsrichtung des Fahrzeuges orientierte Fahrzeugachse bekannt. Hierzu wird eine die Längsdynamik des Fahrzeuges beschreibende Größe ermittelt. Die zur Erkennung der Kipptendenz des Fahrzeuges verwendete Erkennungsstrategie wird wenigstens in Abhängigkeit der die Längsdynamik des Fahrzeuges beschreibenden Größe aus wenigstens zwei Erkennungsstrategien ausgewählt und/oder die zur Erkennung einer Kipptendenz des Fahrzeuges verwendete Erkennungsstrategie, wird wenigstens in Abhängigkeit der die Längsdynamik des Fahrzeuges beschreibenden Größe an die jeweils vorliegende Längsdynamik des Fahrzeuges angepasst.

Aus der DE 198 30 190 A1 ist ein Verfahren zur Begrenzung der Querbeschleunigung eines fahrenden Fahrzeugs bekannt. Dieses umfasst die Schritte Erkennen eines Fahrzustands mit kritischer Querbeschleunigung und Beeinflussung des Bremsdrucks an mindestens einem Rad und/oder Beeinflussung des Antriebsmoments, wenn der Fahrzustand mit kritischer Querbeschleunigung erkannt wurde.

Aus der EP 0 758 601 A2 ist ein Verfahren zur ON-BOARD-Ermittlung von fahrdynamischen Sicherheitsreserven von Nutzfahrzeugen bekannt. Dazu wird aus den fahrzeugdynamischen Werten des Wankwinkels und des dynamischen Korrekturlenkwinkels der Reibschlusswert zur Fahrbahn errechnet. Der Beladungszustand wird aus der Querbeschleunigung und dem Wankwinkel errechnet. Mit weiteren Daten bezüglich der Fahrbahngeometrie und Fahrzustand kann eine rechnerische Aussage über das Bremspotential, die Lenkbarkeit und die Sicherheit gegen das Umkippen des Fahrzeuges erfolgen.

Die Merkmale der Oberbegriffe der unabhängigen Ansprüche gehen aus der DE 198 56 303 A1 hervor.

Vorteile der Erfindung

Die Erfindung geht aus von einem Verfahren zur Erkennung eines querdynamisch gefährlichen Betriebszustandes eines Fahrzeugs, bei dem

- für wenigstens ein Rad einer Achse eine die Raddrehzahl beschreibende Größe ermittelt wird,
- aus wenigstens der einen die Raddrehzahl beschreibenden Größe eine die Querbeschleunigung beschreibende erste Größe ermittelt wird,
- aus Sensorsignalen wenigstens eine die Querbeschleunigung beschreibende zweite Größe ermittelt wird und
- wenigstens abhängig von der ersten Größe und der zweiten Größe der querdynamisch gefährliche Betriebszustand erkannt wird.

Der Kern der Erfindung besteht darin, dass,

- der querdynamisch gefährliche Betriebszustand durch das Abheben dieses Rades dieser Achse von der Fahrbahn oder durch eine diesem Rad unmittelbar drohende Gefahr des Abhebens definiert ist und
- dass die Ermittlung des querdynamisch gefährlichen Betriebszustandes abhängig von dem auf diese Achse des Rades wirkenden Motormoment erfolgt.

Dadurch ist eine robuste und einfach zu realisierende Möglichkeit gegeben, eine unmittelbare Abhebegefahr bzw. das Abheben eines Rades zu erkennen, da insbesondere die Raddrehzahlen und das Motormoment in nahezu allen modernen Fahrzeugen als ermittelte Größen zur Verfügung stehen. Zugleich eröffnet die Erfindung die Möglichkeit, abgehobene Fahrzeugräder ohne Testbremsungen oder Testbeschleunigungen zu detektieren.

Eine vorteilhafte Ausführungsform besteht darin, dass die dem Rad unmittelbar drohende Gefahr des Abhebens dadurch gekennzeichnet ist, dass der Radschlupf des Rades einen von Null nennenswert verschiedenen Wert hat. Der Abhebeprozess eines Rades vom Boden beginnt mit einem Anwachsen des Radschlupfwertes, da der Kontakt vom Reifen zur Fahrbahn verloren geht. Damit ist eine Abnahme des Reibwertes zwischen Reifen und Fahrbahn verbunden. Diese Eigenschaft wird hier ausgenutzt.

Eine weitere vorteilhafte Ausführungsform ist dadurch gekennzeichnet, dass es sich bei der die Fahrzeugquerdynamik beschreibenden ersten und zweiten Größe um die Querbeschleunigung repräsentierende Größen (bzw. die Querbeschleunigung) handelt. Diese Größe kann mit Sensormitteln auf einfache Weise erfasst werden. Als Eingangsgrößen werden damit lediglich die Querbeschleunigung, die Raddrehzahlen und das Motormoment benötigt. Insbesondere arbeitet das Verfahren ohne eine aufwendige Drucksensorik.

Es ist von Vorteil, wenn bei der Ermittlung des querdynamisch gefährlichen Betriebszustandes unterschieden wird, ob das Rad einer angetriebenen oder einer nicht angetriebenen Achse angehört. Räder dieser unterschiedlichen Achsen unterscheiden sich, wenn sie nahezu vollständig oder sogar vollständig von der Fahrbahn abgehoben haben, ganz wesentlich im Drehverhalten voneinander. Sie unterscheiden sich auch im Drehverhalten von den nicht von einer Abhebegefahr bzw. nicht vom Abheben betroffenen Rädern. Dieser Unterschied wird bei dieser Erfindung ausgenutzt.

Eine vorteilhafte Ausführungsform ist dadurch gekennzeichnet, dass für den Fall, dass das Rad einer angetriebenen Achse angehört, durch Auswertung des auf diese Achse wirkenden Motormoments weiter unterschieden wird, ob sich das Fahrzeug im Zugbetrieb oder im Schubbetrieb befindet. Auch hier tauchen wesentliche und leicht erkennbare Unterschiede im Drehverhalten auf.

Es ist von Vorteil, wenn die Erkennung des querdynamisch gefährlichen Betriebszustandes nur stattfindet, wenn der Betrag der Querbeschleunigung einen vorgebbaren Schwellenwert überschreitet. Durch weichen Untergrund wie Schnee oder Sand können Radgeschwindigkeiten auch bei Geradeausfahrt derart verfälscht werden, dass sie als Radabheben fehlinterpretiert werden. Deshalb wird durch eine Abfrage sichergestellt, dass sich das Fahrzeug auf hohem Reibwert in einer Kurve befindet.

Eine vorteilhafte Ausführungsform liegt vor, wenn der querdynamisch gefährliche Betriebszustand durch Auswertung von Ungleichungen ermittelt wird, in welche die die Fahrzeugquerdynamik beschreibende erste Größe und die die Fahrzeugquerdynamik beschreibende zweite Größe eingehen und wenn die Form der Ungleichung durch das auf die Achse des Rades wirkende Motormoment (Mmot) bestimmt wird. Diese Ungleichungen können in unaufwendiger Weise in einem Steuergerät (z.B. dem Steuergerät einer Fahrdynamikregelung) hinterlegt werden.

Die Formulierung, dass
"aus wenigstens der einen die Raddrehzahl beschreibenden Größe eine die Fahrzeugquerdynamik beschreibende erste Größe ermittelt wird"
berücksichtigt die Möglichkeit, dass eine die Fahrzeugquerdynamik beschreibende erste Größe aus der einen die Raddrehzahl beschreibenden Größe und einer weiteren Größe, beispielsweise dem Lenkwinkel, ermittelt wird. Selbstverständlich ist es denkbar, wie auch im Ausführungsbeispiel beschrieben, dass aus wenigstens zwei die Raddrehzahl beschreibenden Größen eine die Fahrzeugquerdynamik beschreibende erste Größe ermittelt wird.
Es ist sogar denkbar, dass aus wenigstens zwei die Raddrehzahl beschreibenden Größen eine die Fahrzeugquerdynamik beschreibende erste Größe ermittelt wird, wobei die wenigstens zwei die Raddrehzahl beschreibenden Größen zwei Rädern einer Achse zugeordnet sind.

Die Erfindung umfasst auch eine die Anordnung zur Durchführung des erfindungsgemäßen Verfahrens.

Zeichnung

Die Zeichnung besteht aus den Figuren 1 bis 4.

In Fig. 1. ist der Ablauf des erfindungsgemäßen Verfahrens in einfacher Form für ein heckgetriebenes Fahrzeug dargestellt.

In Fig. 2 ist der Ablauf des erfindungsgemäßen Verfahrens in komplexerer Form für ein mit Allradantrieb betreibbares Fahrzeug dargestellt

In Fig. 3 ist die Wirkungsweise der Erfindung anhand gemessener Signalverläufe dargestellt.

In Fig. 4 ist der Aufbau der Vorrichtung zur Erkennung querdynamisch gefährlicher Betriebszustände dargestellt.

Ausführungsbeispiele

In den Ausführungsbeispielen wird das Verfahren anhand von Querbeschleunigungssignalen erläutert. Das Verfahren basiert auf einem Vergleich des von einem Querbeschleunigungssensor gelieferten zweiten Querbeschleunigungssignals und einem aus den Raddrehzahlen berechneten ersten Querbeschleunigungssignal. Die Berechnung des ersten Querbeschleunigungssignals aq1 aus den Raddrehzahlen der beiden Räder einer Achse kann beispielsweise anhand der Beziehung

aq1 = (vaussen - vinnen)*v0/S

erfolgen. Dabei ist vaussen die Radgeschwindigkeit des kurvenäußeren Rades, vinnen ist die Radgeschwindigkeit des kurveninneren Rades, v0 ist die Fahrzeuggeschwindigkeit und S ist die Spurweite des Fahrzeugs. Diese Beziehung liefert nur dann die richtige Querbeschleunigung, wenn der Radschlupf der Räder mit Null angenommen wird. Bei einem unmittelbar bevorstehenden Abheben der Räder oder bei abgehobenen Rädern ist dies nicht mehr der Fall, da dann der Schlupf wesentlich von Null verschiedene Werte annimmt. Bei durchdrehenden Rädern (das Fahrzeug bewegt sich nicht, d.h. die Fahrzeuglängsgeschwindigkeit ist Null) nimmt der Radschlupf den Maximalwert 1 an.

Deshalb basiert die Erfindung darauf, dass bei einem nahezu vollständig oder vollständig abgehobenen Rad von der Fahrbahn signifikante Fehler des aus den Raddrehzahlen berechneten ersten Querbeschleunigungssignals auftreten, welche als Radentlastungen interpretiert werden können.

Der Einfachheit halber gilt im folgenden die folgende Nomenklatur: Wenn von einem angehobenen Rad die Rede ist, dann ist nicht nur ein vollständig abgehobenes Rad damit gemeint, sondern auch ein nahezu vollständig abgehobenes Rad (welches noch einen schwachen Kontakt zur Fahrbahnoberfläche aufweist).

Die Fehler des aus den Raddrehzahlen berechneten ersten Querbeschleunigungssignals werden im folgenden klassifiziert:

Fall 1:

An der nicht angetriebenen Achse verringert sich die Raddrehzahl des abgehobenen kurveninneren Rades infolge von Lagerreibung und möglicherweise schleifender Bremsbeläge. Dadurch vergrößert sich die Drehzahldifferenz zum kurvenäußeren Rad, die Radgeschwindigkeitsdifferenz (vaussen-vinnen) wird größer. Es tritt damit eine deutliche Überhöhung der berechneten ersten Querbeschleunigung aq1 gegenüber der gemessenen zweiten Querbeschleunigung aq2 auf.

Fall 2:

Es wird ein Rad an der angetriebenen Achse mit einem auf die Achse antreibend wirkenden Motormoment Mmot > 0 betrachtet. Das Fahrzeug befindet sich im Zugbetrieb. Da sich ein nahezu abgehobenes oder vollständig abgehobenes kurveninneres Rad nahezu frei drehen kann, tritt nun ein zunehmender Antriebsschlupf des Rades auf und die Raddrehzahldifferenz zum entsprechenden kurvenäußeren Rad verringert sich. Damit ergibt die berechnete erste Querbeschleunigung einen zu geringen Wert.

Fall 3:

Es wird ein Rad an der angetriebenen Achse mit einem auf die Achse bremsend wirkenden Motormoment Mmot < 0 betrachtet. Das Fahrzeug befindet sich im Schubbetrieb. Es tritt ein leichter Schleppschlupf des Rades auf und die Raddrehzahldifferenz zum entsprechenden kurvenäußeren Rad vergrößert sich. Damit ergibt die berechnete erste Querbeschleunigung analog dem Fall der nicht angetriebenen Achse einen zu großen Wert.

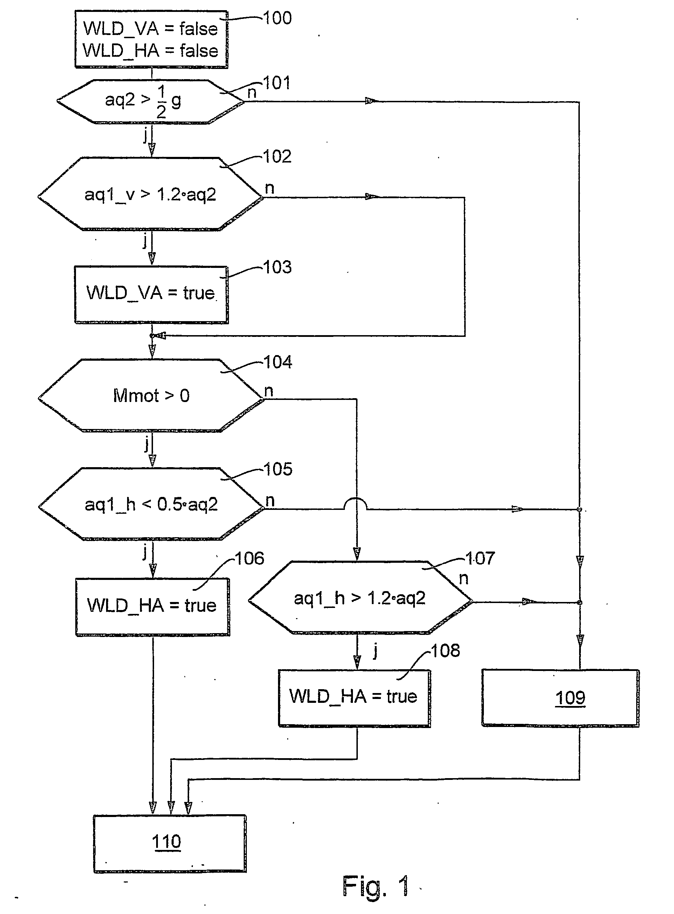

In Figur 1 wird das erfindungsgemäße Verfahren für ein heckgetriebenes Fahrzeug dargestellt. Beim heckgetriebenen Fahrzeug sind die Räder der Vorderachse die nicht angetriebenen Räder, die Räder der Hinterachse werden als angetriebene Räder bezeichnet. Von einer Abhebegefahr betroffen sind stets die kurveninneren Räder. Deshalb wird dem kurveninneren Vorderrad (bzw. der Vorderachse) und dem kurveninneren Hinterrad (bzw. der Hinterachse) jeweils ein Flag zugeordnet, dessen Zustand anzeigt,

- ob das Rad von einer unmittelbaren Abhebegefahr betroffen ist oder sogar bereits abgehoben hat,
- oder ob keinerlei Abhebegefahr für das Rad besteht. Zuerst werden in Block 100 die Flags für das kurveninnere Hinterrad (WLD_HA) und das kurveninnere Vorderrad (WLD_VA) so gesetzt, dass sie auf keine Abhebegefahr hinweisen: WLD_HA = false und WLD_VA = false. Dabei kennzeichnet WLD_VA = false, dass das kurveninnere Rad der Vorderachse nicht abgehoben hat. WLD_HA = false kennzeichnet, dass das kurveninnere Rad der Hinterachse nicht abgehoben hat.

Der Zustand dieser Flags soll nun mit dem Verfahren überprüft werden. Dazu findet in Block 101 eine erste Abfrage aq2 > 0.5*g statt. aq2 ist die beispielsweise mit einem Querbeschleunigungssensor gemessene Querbeschleunigung, 0.5*g ist die halbe Erdbeschleunigung und steht als Beispiel für einen Schwellenwert. Überschreitet die Querbeschleunigung aq2 diesen Schwellenwert nicht, dann wird in Block 101 zu Block 109 weiterverzweigt. In Block 109 können beispielsweise weitere Auswertemöglichkeiten implementiert werden. Das ist physikalisch dadurch begründet, dass die Querbeschleunigung keine kritische Schwelle überschritten hat und damit keine Abhebegefahr für die Räder besteht.

Überschreitet allerdings die Querbeschleunigung aq2 die kritische Schwelle 0.5*g, dann findet in Block 102 eine weitere Abfrage statt. Diese lautet:

$$aq1\_v > 1.2 * aq2 \quad .$$

Durch diese Abfrage wird überprüft, ob bei der nicht angetriebenen Vorderachse das kurveninnere Rad abgehoben hat (hier wird der bereits erwähnte Fall 1 überprüft). Ist diese Bedingung erfüllt, d. h. es wird ein Abheben oder ein unmittelbar bevorstehendes Abheben des kurveninneren Vorderrades festgestellt, dann wird in Block 103 das Flag, welches dem kurveninneren Vorderrad bzw. der Vorderachse zugeordnet ist, in denjenigen Zustand gesetzt, in welchem ein Abheben signalisiert wird: WLD_VA = true. Ist die Abfragebedingung in Block 102 jedoch nicht erfüllt, dann wird zu Block 104 weiterverzweigt. Der Wert 1.2 ist nur beispielhaft gewählt.

Nachdem in den Blöcken 102 und 103 der Zustand des kurveninneren Vorderrades festgestellt wurde, wird nun ab Block 104 das kurveninnere Hinterrad untersucht. Dazu wird folgende Abfrage in Block 104 durchgeführt: Mmot > 0? Mmot ist dabei die vom Motor abgegebene Leistung. Ist Mmot > 0 dann befindet sich das Fahrzeug im Zugbetrieb, ist Mmot < 0 dann befindet sich das Fahrzeug im Schubbetrieb. Ist die Bedingung 104 erfüllt dann.wird in Block 105 eine erneute Abfrage durchgeführt. Diese lautet:

$$aq1\_H < 0.5 * aq2 \quad .$$

Hier sei erwähnt, dass der Wert 0.5 nur beispielhaft gewählt ist. Es ist insbesondere auch denkbar, anstelle des Wertes 0.5 den Wert 0 zu wählen. In diesem Fall lautet die Abfragebedingung aq1_h < 0 und ein Radabheben wird dann detektiert, wenn die aus den Raddrehzahlen der Hinterachse berechnete Querbeschleunigung aq1_h ein entgegengesetztes Vorzeichen gegenüber der ermittelten Querbeschleunigung aq2 aufweist.

Durch die Abfrage in Block 105 wird überprüft, ob im Zugbetrieb (Mmot > 0) das kurveninnere Hinterrad abgehoben hat (das entspricht dem eingangs erwähnten Fall 2). Hat dieses Rad abgehoben, d. h. die Bedingung in Block 105 kann mit ja beantwortet werden, dann wird in Block 106 das dem kurveninneren Hinterrad zugeordnete Flag so gesetzt, dass es einen Abhebezustand anzeigt: WLD_HA = true .

Wird diese Bedingung mit nein beantwortet, dann wird zu Block 109 weiterverzweigt, es hat kein Rad der Hinterachse abgehoben.

Ist allerdings die Bedingung Mmot > 0 in Block 104 nicht erfüllt, d. h. das Fahrzeug befindet sich im Schubbetrieb dann wird in Block 107 die Abfrage aq1_h > 1.2 * aq2 durchgeführt (dies entspricht dem eingangs erwähnten Fall 3). Wird diese Abfrage mit Nein beantwortet, dann wird zu Block 109 weiterverzweigt, es hat kein Rad der Hinterachse abgehoben.

Wird diese Abfrage mit Ja beantwortet, dann wird in Block 108 festgestellt, dass das kurveninnere Hinterrad abgehoben hat. Die Ausgangssignale der Blöcke 106, 108 und 109 werden an Block 110 weitergeleitet. Dieser Block kennzeichnet das Ende des Verfahrens. Es ist möglich Block 110 wiederum mit Block 100 zu verbinden, d.h. nach Ablauf des Verfahrens findet eine erneute Überprüfung des Zustandes der Räder statt. Das Verfahren kann damit in regelmäßigen oder unregelmäßigen Zeitabständen immer wieder ablaufen.

Die Erkennung eines abgehobenen Fahrzeugrades erfolgt ebenfalls in Block 110 durch Auswertung der Flags WLD_VA und WLD_HA. Damit können beispielsweise geeignete Maßnahmen gegen das Abheben von Rädern eingeleitet werden.

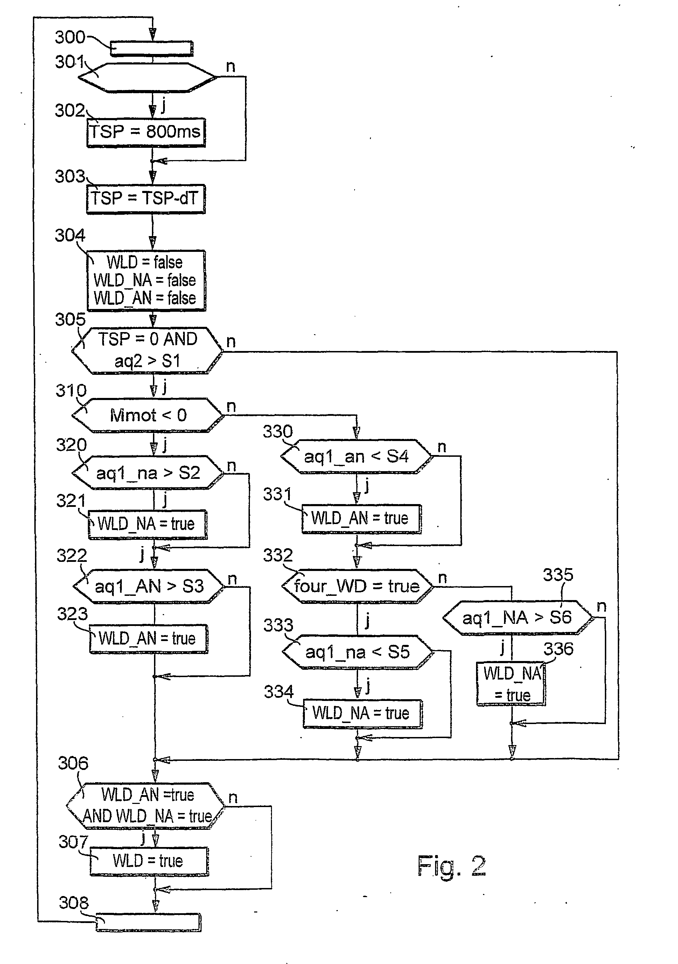

In Figur 2 ist der Algorithmus für ein mit Allradantrieb betreibbares Fahrzeug dargestellt. Dabei wird ein Fahrzeug mit zuschaltbarem Allradantrieb betrachtet und es wird folgende Sprachregelung verwendet:

- die "angetriebene Achse" ist diejenige Achse des Fahrzeugs, welche (auch bei abgeschaltetem Allradantrieb) angetrieben ist.
- Als "nicht angetriebene Achse" wird diejenige Achse bezeichnet, welche über den Allradantrieb zuschaltbar ist. In Block 300 beginnt das erfindungsgemäße Verfahren. In Block 301 findet anschließend eine Reihe von Überprüfungen statt.

Überprüfung 1: Es wird überprüft, ob das Bremslicht aktiviert ist.

Überprüfung 2: Es wird überprüft, ob momentan ein Reifentoleranzabgleich stattfindet.

Überprüfung 3: Es wird überprüft, ob der Querbeschleunigungssensor in Ordnung ist.

Überprüfung 4: Es wird überprüft, ob das Differential der Querbeschleunigung dividiert durch das Differential der Zeit, d.h. die zeitliche Änderung der Querbeschleunigung, einen vorgebbaren Schwellenwert überschreitet.

Überprüfung 5: Es wird überprüft, ob ein aktiver Bremseingriff durch ein Fahrdynamikregelungssystem oder ein anderes System wie ASR oder ABS stattfindet.

Ist wenigstens eine dieser Bedingungen erfüllt, dann wird in Block 302 ein Zeitzähler TSP auf den Wert 800 ms gesetzt (der Wert 800 ms ist nur beispielhaft gewählt). Das bedeutet, dass für dieses Zeitintervall (= Sperrzeitraum) keine Überprüfung stattfinden soll, ob ein Rad angehoben hat. Sind alle Bedingungen zugleich nicht erfüllt, dann wird zu Block 303 weiterverzweigt. In Block 303 findet eine Dekrementation der Zeit statt: TSP = TSP - dT. dT ist dabei eine Zeitkonstante, beispielsweise in der Größenordnung von 10 ms. Anschließend werden in Block 304 die Flags folgendermaßen gesetzt. WLD = false, WLD_NA = false und WLD_AN = false. Dabei kennzeichnet WLD, ob zumindest ein Rad abgehoben hat. WLD_NA kennzeichnet, ob ein Rad einer nicht angetriebenen Achse abgehoben hat und WLD_AN kennzeichnet, ob ein Rad einer angetriebenen Achse abgehoben hat (der Status "true" dieser Flags kennzeichnet stets, dass das entsprechende Rad abgehoben hat).

In Block 305 finden anschließend zwei Abfragen TSP = 0 und aq2 > S1 statt. Hier wird überprüft,

- ob der Sperrzeitraum TSP bereits beendet ist und
- ob die gemessene Querbeschleunigung aq2 einen ersten Schwellenwert S1 überschreitet.

Sind nicht beide Bedingungen zugleich erfüllt, dann wird zu Block 306 weiterverzweigt. Dort wird abgefragt, ob WLD_AN = true erfüllt ist und ob zugleich WLD_NA = true erfüllt ist. Ist dies nicht der Fall, dann wird zu Block 308 weiterverzweigt, welcher das Ende des erfindungsgemäßen Verfahrens kennzeichnet. Sind beide Bedingungen dagegen erfüllt, wird in Block 307 das Flag WLD = true gesetzt. Das bedeutet, dass beide kurveninneren Räder abgehoben haben. Anschließend wird zu Block 308 weitergegangen. Von Block 308 wird zu Block 300 zurückverzweigt und das Verfahren läuft erneut ab.

Sind jedoch beide Bedingungen in Block 305 erfüllt, dann wird nachgeprüft, ob das vom Motor abgegebene Moment Mmot kleiner oder größer als Null ist, d.h. ob sich das Fahrzeug im Schubbetrieb (Mmot < 0) oder im Zugbetrieb (Mmot > 0) befindet.

Ergibt die Prüfung in Block 310, dass Mmot < 0 erfüllt ist (d.h. das Fahrzeug befindet sich im Schubbetrieb) dann findet in Block 320 eine weitere Abfrage statt. Dort wird überprüft, ob aq1_NA > S2 ist. Dabei ist aq1_NA die aus den Raddrehzahlen der nicht angetriebenen Räder berechnete Querbeschleunigung. Ist diese Bedingung erfüllt, dann wird in Block 321 das Flag WLD_NA = true gesetzt. Das bedeutet, dass das kurveninnere Rad der nicht angetriebenen Achse abgehoben hat. Ist die Bedingung in Block 320 jedoch nicht erfüllt, dann wird direkt zu Block 322 weitergegangen. Block 321 liefert ebenfalls sein Ausgangssignal an Block 322.

In Block 322 findet eine weitere Abfrage statt: aq1_AN > S3? Dabei ist aq1_AN die aus der Raddrehzahldifferenz der Räder der angetriebenen Achse berechnete Querbeschleunigung. Ist diese Bedingung nicht erfüllt, dann wird zu Block 306 weiterverzweigt. Ist diese Bedingung jedoch erfüllt, dann wird in Block 323 das Flag WLD_AN = true gesetzt, d.h. das kurveninnere angetriebene Rad hat abgehoben. Danach wird ebenfalls zu Block 306 weitergegangen.

Nun wird der Fall Mmot > 0 betrachtet. Die Bedingung in Block 310 ist nicht erfüllt, das Fahrzeug befindet sich im Zugbetrieb. Deshalb lautet in Block 330 die erste Abfrage aq1_AN < S4. Dabei ist aq1 die aus den Raddrehzahlen der angetriebenen Räder berechnete Querbeschleunigung. S4 ist ein wählbarer Schwellenwert. Ist die Bedingung in Block 330 nicht erfüllt, dann wird zu Block 332 weitergegangen. Ist die Bedingung erfüllt, dann wird in Block 331 das Flag WLD_AN = true gesetzt, d.h. ein angetriebenes Rad hat abgehoben. Anschließend wird ebenfalls zu Block 332 weitergegangen.

In Block 332 findet eine Abfrage bzgl. des Flags Four_WD statt: Four_WD = true? Damit wird überprüft, ob ein Allradantrieb aktiviert ist. Damit wird der Zustand der nicht angetriebenen Achse abgefragt.

Ist der Allradantrieb aktiviert, d.h. Four_WD = true, dann findet in Block 333 die Abfrage aq1_NA < S5 statt. Hier wird eine Querbeschleunigung aus der Drehzahldifferenz der nicht angetriebenen Räder berechnet. Es ist hierbei zu beachten, dass die "nicht angetriebenen Räder" in diesem Fall über die Allradsteuerung dem Antrieb zugeschaltet sind, d.h. sie sind ebenfalls angetrieben. Ist die Bedingung in Block 333 erfüllt, dann wird in Block 334 die Variable WLD_NA = true gesetzt, d.h. das "nicht angetriebene" kurveninnere Rad hat abgehoben (auch hier wieder die Randbemerkung, dass dieses Rad im momentanen Betriebszustand durch die Zuschaltung des Allradantriebes angetrieben ist). Ist diese Bedingung allerdings nicht erfüllt, dann wird zu Block 306 weiterverzweigt. Von Block 334 wird ebenfalls zu Block 306 weitergegangen.

Ist die Bedingung 332 allerdings nicht erfüllt, dann folgt in Block 335 eine Abfrage aq1_NA > S6. S6 ist dabei ein wählbarer Schwellenwert. Diese Räder sind nun nicht angetrieben, denn in Block 332 wurde die Allradschaltung als nicht aktiviert detektiert (Four_WD = false). Ist die Bedingung in Block 335 nicht erfüllt, dann wird zu Block 306 weiterverzweigt, ist die Bedingung jedoch erfüllt, dann findet in Block 336 die Feststellung WLD_NA = true statt, d.h. das nicht angetriebene kurveninnere Rad hat abgehoben. Anschließend wird zu Block 306 weitergegangen.

Die Blöcke 306, 307 und 308 wurden bereits beschrieben. Es ist möglich von Block 308 zu Block 300 zurückzuverzweigen. In diesem Fall wird das Verfahren erneut abgearbeitet.

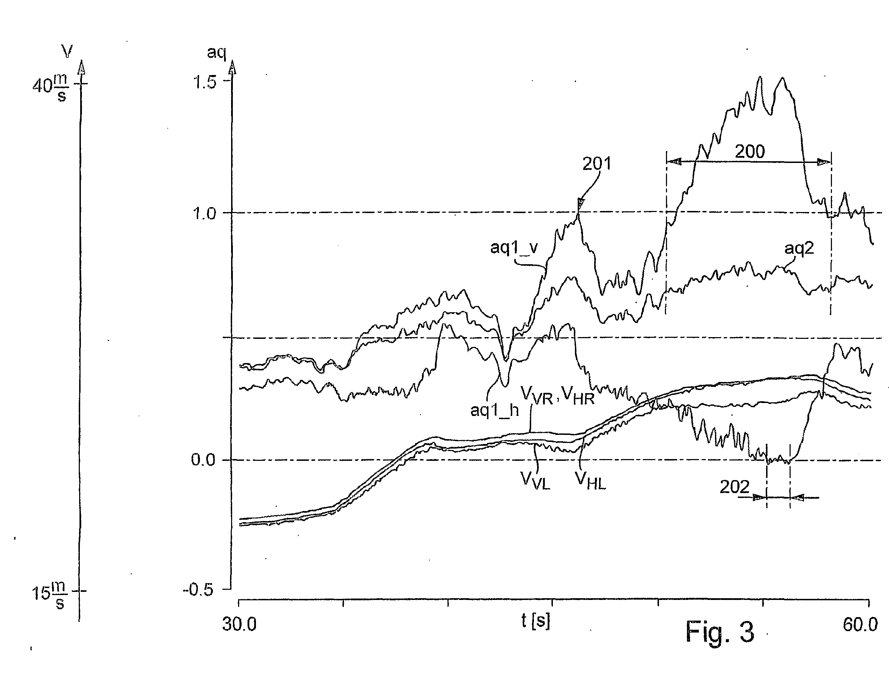

Als nächstes soll Fig. 3 diskutiert werden. In Abszissenrichtung ist in Fig. 3 die Zeit t in Sekunden dargestellt. In Ordinatenrichtung sind links zwei Achsen eingezeichnet. Entlang der linken Ordinatenachse ist die Radgeschwindigkeit v in m/s aufgetragen, entlang der rechten Ordinatenachse ist die Querbeschleunigung in Einheiten der Erdbeschleunigung g aufgetragen.

Nun werden die in Fig. 3 eingezeichneten Kurven erläutert:

- die oberste dieser Kurven ist die anhand der Raddrehzahlen der Vorderachse berechnete Querbeschleunigung aq1_v,

- danach folgt die gemessene Querbeschleunigung aq2,
- die dritte Kurve von oben ist die anhand der Raddrehzahlen der Hinterachse berechnete Querbeschleunigung aq1_h.

Für diese Kurven gilt in Ordinatenrichtung die mit aq bezeichnete Ordinate.

Die unteren 4 eingezeichneten Kurven sind (in der Reihenfolge von oben nach unten)

- die Geschwindigkeiten $v_{VR}$ des rechten Vorderrades und $v_{HR}$ des rechten Hinterrades,
- die Geschwindigkeit $v_{HL}$ des linken Hinterrades und
- die Geschwindigkeit $v_{VL}$ des linken Vorderrades. Für diese Kurven gilt in Ordinatenrichtung die mit v bezeichnete Ordinate.

Die Geschwindigkeiten $v_{VR}$ des $v_{HR}$ sind fast völlig identisch. Das hängt damit zusammen, dass die Kurven anhand einer Kreisfahrt des Fahrzeugs ermittelt, wobei stets nach links gelenkt wurde. Das bedeutet, dass die beiden rechten Räder die kurvenäußeren Räder sind und deshalb nur einen geringen Schlupf und keine Abhebegefahr aufweisen.

In Abszissenrichtung ist die Zeit t in Sekunden aufgetragen.

Beim Fahrzeug handelte es sich um ein heckgetriebenes Fahrzeug. Während der aufgezeichneten Testfahrt wird zweimal des Abheben des linken Vorderrades festgestellt:

- zum Zeitpunkt 201 findet ein kurzeitiges Abheben des linken Vorderrades statt und
- während des gesamten Zeitintervalles 200 hebt das linke Vorderrad ab.

Während des Zeitintervalles 202 wird ein Abheben des linken Hinterrades festgestellt.

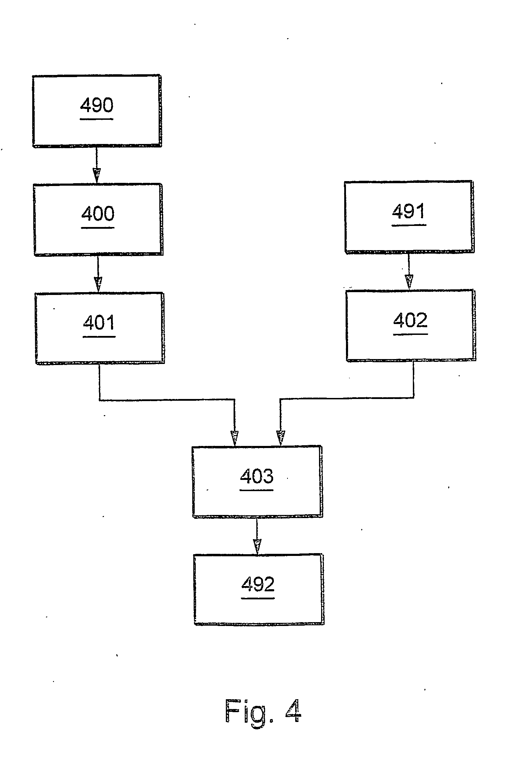

Der Aufbau der Vorrichtung zur Erkennung eines querdynamisch gefährlichen Betriebszustandes ist in Fig. 4 dargestellt. Dabei haben die Blöcke folgende Bedeutung:

Block 400: Raddrehgeschwindigkeitsermittlungsmittel

Block 401: erste Fahrzeugquerdynamikermittlungsmittel

Block 402: zweite Fahrzeugquerdynamikermittlungsmittel

Block 403: Betriebszustandserkennungsmittel

Block 490: erste Sensormittel (z.B. Raddrehzahlsensoren)

Block 491: zweite Sensormittel (z.B. Querbeschleunigungssensor

Block 492: Aktormittel (z.B. Bremsen, Motorsteuerung,...) oder Fahrerinformationsmittel (z.B. Display, akustisches Signal,...).

Die ersten Sensormittel 490 liefern Ihre Signale an die Raddrehgeschwindigkeitsermittlungsmittel 400. Diese liefern ihre Signale an die ersten Fahrzeugquerdynamikermittlungsmittel 401. Die zweiten Sensormittel 491 liefern Ihre Ausgangssignale an die zweiten Fahrzeugquerdynamikermittlungsmittel 402. Die Blöcke 401 und 402 liefern Ihre Ausgangssignale an die Betriebszustandserkennungsmittel 403. Block 403 liefert seine Ausgangssignale an Block 492.

**Patentansprüche**

1. Verfahren zur Erkennung eines querdynamisch gefährlichen Betriebszustandes eines Fahrzeugs, bei dem

   - für wenigstens ein Rad einer Achse eine die Raddrehzahl beschreibende Größe (v) ermittelt wird,
   - aus wenigstens der einen die Raddrehzahl beschreibenden Größe eine die Querbeschleunigung repräsentierende erste Größe (aq1) ermittelt wird,
   - anhand des Querbeschleunigungssensors wenigstens eine die Querbeschleunigung repräsentierende zweite Größe (aq2) ermittelt wird und
   - wenigstens abhängig von der ersten Größe (aq1) und der zweiten Größe (aq2) der querdynamisch gefährliche Betriebszustand erkannt wird,

   **dadurch gekennzeichnet, dass**,

   - der querdynamisch gefährliche Betriebszustand durch das Abheben dieses Rades der Achse von der Fahrbahn oder durch eine diesem Rad unmittelbar drohende Gefahr des Abhebens definiert ist und
   - dass die Ermittlung des querdynamisch gefährlichen Betriebszustandes abhängig von dem auf diese Achse wirkenden Motormoment (Mmot) erfolgt.

2. Verfahren nach Anspruch 1, **dadurch gekennzeichnet, dass** die dem Rad unmittelbar drohende Gefahr des Abhebens **dadurch gekennzeichnet ist, dass** der Radschlupf dieses Rades der Achse einen von Null nennenswert verschiedenen Wert hat.

3. Verfahren nach Anspruch 1, **dadurch gekennzeichnet, dass** es sich bei der die Fahrzeugquerdynamik beschreibenden ersten und zweiten Größe um eine die Querbeschleunigung repräsentierende Größe (aq1, aq2) handelt.

**4.** Verfahren nach Anspruch 1, **dadurch gekennzeichnet, dass** bei der Ermittlung des querdynamisch gefährlichen Betriebszustandes unterschieden wird, ob es sich bei der Achse um eine angetriebene oder eine nicht angetriebene Achse handelt.

**5.** Verfahren nach Anspruch 4, **dadurch gekennzeichnet, dass** für den Fall, dass die Achse angetrieben ist (AN), durch Auswertung des auf diese Achse wirkenden Motormoments ermittelt wird, ob sich das Fahrzeug im Zugbetrieb oder im Schubbetrieb befindet.

**6.** Verfahren nach Anspruch 3, **dadurch gekennzeichnet, dass** die Erkennung des querdynamisch gefährlichen Betriebszustandes nur stattfindet, wenn der Betrag der Querbeschleunigung einen vorgebbaren Schwellenwert (S1) überschreitet.

**7.** Verfahren nach Anspruch 1, **dadurch gekennzeichnet, dass** der querdynamisch gefährliche Betriebszustand durch Auswertung von Ungleichungen ermittelt wird, in welche die die Fahrzeugquerdynamik beschreibende erste Größe (aq1) und die die Fahrzeugquerdynamik beschreibende zweite Größe (aq2) eingehen und dass die Form der Ungleichungen durch das auf die Achse des Rades wirkende Motormoment (Mmot) bestimmt wird.

**8.** Vorrichtung zur Erkennung eines querdynamisch gefährlichen Betriebszustandes eines Fahrzeugs, welche über

    - Raddrehgeschwindigkeitsermittlungsmittel zur Ermittlung einer die Raddrehzahl beschreibenden Größe (v) für wenigstens ein Rad einer Achse,
    - erste Fahrzeugquerdynamikermittlungsmittel zur Ermittlung einer die Querbeschleunigung repräsentierenden ersten Größe (aq1) aus wenigstens der einen die Raddrehzahl beschreibenden Größe,
    - zweite Fahrzeugquerdynamikermittlungsmittel zur Ermittlung einer die Querbeschleunigung repräsentierenden zweiten Größe (aq2) anhand wenigstens des Querbeschleunigungssensors und
    - Betriebszustandserkennungsmitteln zur Erkennung des querdynamisch gefährlichen Betriebszustandes wenigstens abhängig von der ersten Größe (aq1) und der zweiten Größe (aq2),
verfügt und **dadurch gekennzeichnet ist, dass**,
    - der querdynamisch gefährliche Betriebszustand durch das Abheben dieses Rades dieser Achse von der Fahrbahn oder durch eine diesem Rad unmittelbar drohende Gefahr des Abhebens definiert ist und
    - dass die Betriebszustandserkennungsmittel so ausgestaltet sind, dass die Ermittlung des querdynamisch gefährlichen Betriebszustandes abhängig von dem auf diese Achse wirkenden Motormoment (Mmot) erfolgt.

**Claims**

**1.** Method for detecting an operating state of a vehicle which is hazardous in terms of lateral dynamics, in which

    - a variable (v) which describes the wheel speed is determined for at least one wheel of an axle,
    - a first variable (aq1) which represents the lateral acceleration is determined from at least one variable which describes the wheel speed,
    - at least one second variable (aq2) which represents the lateral acceleration is determined by means of the lateral acceleration sensor, and
    - the operating state which is hazardous in terms of lateral dynamics is detected at least as a function of the first variable (aq1) and the second variable (aq2),

    **characterized in that**

    - the operating state which is hazardous in terms of lateral dynamics is defined by the lifting off of this wheel of the axle from the underlying surface or by immediate risk of this wheel lifting off, and
    - **in that** the determination of the operating state which is hazardous in terms of lateral dynamics is carried out as a function of the engine torque (Mmot) acting on this axle.

**2.** Method according to Claim 1, **characterized in that** the immediate risk of the wheel lifting off is **characterized in that** the wheel slip of this wheel of the axle has a value which is appreciably different from zero.

**3.** Method according to Claim 1, **characterized in that** the first and second variables which describe the lateral dynamics of the vehicle are a variable (aq1, aq2) which represents the lateral acceleration.

**4.** Method according to Claim 1, **characterized in that** during the determination of the operating state which is hazardous in terms of the lateral dynamics a driven axle is differentiated from a nondriven axle.

**5.** Method according to Claim 4, **characterized in that** if the axle is driven (AN) it is determined, by evaluating the engine torque acting on this axle, whether the vehicle is in traction mode or in overrun mode.

**6.** Method according to Claim 3, **characterized in that** the detection of the operating state which is hazardous in terms of lateral dynamics takes place only if the absolute value of the lateral acceleration exceeds a predefinable threshold value (S1).

**7.** Method according to Claim 1, **characterized in that** the operating state which is hazardous in terms of lateral dynamics is determined by evaluating equations into which the first variable (aq1) which describes the lateral dynamics of the vehicle and the second variable (aq2) which describes the lateral dynamics of the vehicle are fed, and **in that** the form of the equations is determined by the engine torque (Mmot) acting on the axle of the wheel.

**8.** Device for detecting an operating state of a vehicle which is hazardous in terms of lateral dynamics, which device has

- wheel speed determining means for determining a variable (v) which describes the wheel speed for at least one wheel of an axle,
- first vehicle lateral dynamic determining means for determining a first variable (aq1) which represents the lateral acceleration, from at least the one variable which describes the wheel speed,
- second vehicle lateral dynamic determining means for determining a second variable (aq2) which represents the lateral acceleration, by means of at least the lateral acceleration sensor, and
- operating state detection means for detecting the operating state which is hazardous in terms of lateral dynamics, at least as a function of the first variable (aq1) and the second variable (aq2),

and **characterized in that**
- the operating state which is hazardous in terms of lateral dynamics is defined by the lifting off of this wheel of this axle from the underlying surface or by an immediate risk of this wheel lifting off, and
- **in that** the operating state detection means is configured in such a way that the operating state which is hazardous in terms of lateral dynamics is determined as a function of the engine torque (Mmot) acting on this axle.

**Revendications**

**1.** Procédé de détection d'un état de fonctionnement dangereux en dynamique transversale d'un véhicule selon lequel

- on détermine une grandeur (v) décrivant la vitesse de rotation de roue pour au moins une roue d'un essieu,
- à partir de la grandeur décrivant la vitesse de rotation de roue, on détermine une première grandeur (aq1) représentant l'accélération transversale,
- à l'aide du capteur d'accélération transversale, on détermine au moins une seconde grandeur (aq2) représentant l'accélération transversale,
- on reconnaît l'état de fonctionnement dangereux en dynamique transversale au moins en fonction de la première grandeur (aq1) et de la seconde grandeur (aq2),

**caractérisé en ce qu'**

- on définit l'état de fonctionnement dangereux en dynamique transversale par le soulèvement de cette roue de l'essieu par rapport à la chaussée ou par un risque immédiat de soulèvement de cette roue et
- on détermine l'état de fonctionnement dangereux en dynamique transversale en fonction du couple moteur (Mmot) appliqué à cet essieu.

**2.** Procédé selon la revendication 1, **caractérisé en ce que** le risque de soulèvement immédiat de la roue se distingue **en ce que** le patinage de cette roue de l'essieu a une valeur significativement différente de zéro.

**3.** Procédé selon la revendication 1, **caractérisé en ce que** la première et la seconde grandeur décrivant la dynamique transversale du véhicule sont une grandeur (aq1, aq2) représentant l'accélération transversale.

**4.** Procédé selon la revendication 1, **caractérisé en ce que** dans la détermination de l'état de fonctionnement dangereux en dynamique transversale, on distingue entre l'essieu moteur et l'essieu non moteur.

**5.** Procédé selon la revendication 4, **caractérisé en ce que** dans le cas de l'essieu moteur (AN), en exploitant le couple moteur appliqué à cet essieu on détermine si le véhicule est en mode de traction ou de poussée.

**6.** Procédé selon la revendication 3, **caractérisé en ce que** la détection de l'état de fonctionnement dangereux en dynamique transversale ne se fait que si l'amplitude de l'accélération transversale dépasse un seuil prédéfini (S1).

**7.** Procédé selon la revendication 1,
**caractérisé en ce que**
l'état de fonctionnement dangereux en dynamique transversale se détermine par l'exploitation d'inégalités faisant intervenir la première grandeur (aq1) décrivant la dynamique transversale du véhicule et la seconde grandeur (aq2) décrivant la dynamique transversale du véhicule et la forme des inégalités est définie par le couple moteur (Mmot) appliqué à l'essieu de la roue.

**8.** Dispositif de détection d'un état de fonctionnement dangereux en dynamique transversale d'un véhicule comprenant :

- des moyens de détermination de la vitesse de roue pour déterminer une grandeur (v) décrivant la vitesse de rotation d'une roue pour au moins une roue d'un essieu,
- des premiers moyens de détermination de la dynamique transversale du véhicule pour déterminer une première grandeur (aq1) représentant l'accélération transversale à partir d'au moins une grandeur décrivant la vitesse de rotation de roue,
- des seconds moyens de détermination de la dynamique transversale du véhicule pour déterminer une seconde grandeur (aq2) représentant l'accélération transversale à l'aide d'au moins un capteur d'accélération transversale et
- des moyens de détection de l'état de fonctionnement pour déterminer l'état de fonctionnement dangereux en dynamique transversale au moins en fonction de la première grandeur (aq1) et de la seconde grandeur (aq2),

**caractérisé en ce que**

- l'état de fonctionnement dangereux en dynamique transversale est défini par le soulèvement de cette roue de cet essieu par rapport à la chaussée ou par un risque imminent de soulèvement de cette roue, et
- les moyens de détection de l'état de fonctionnement sont conçus pour que la détermination de l'état de fonctionnement dangereux en dynamique transversale se fasse en fonction du couple moteur (Mmot) appliqué à cet essieu.

Fig. 1

$$WLD\_VA = false$$
$$WLD\_HA = false \quad 100$$

$$aq2 > \frac{1}{2} g \quad 101 \quad n$$

$$aq1\_v > 1.2 \cdot aq2 \quad 102 \quad n$$

$$WLD\_VA = true \quad 103$$

$$Mmot > 0 \quad 104 \quad n$$

$$aq1\_h < 0.5 \cdot aq2 \quad 105 \quad n$$

$$WLD\_HA = true \quad 106$$

$$aq1\_h > 1.2 \cdot aq2 \quad 107 \quad n$$

$$WLD\_HA = true \quad 108$$

$$109$$

$$110$$

Fig. 2

Fig. 3

EP 1 480 855 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19751925 A1
- DE 19856303 A1
- US 6321141 B1
- DE 19830190 A1
- EP 0758601 A2